(19) **Europäisches Patentamt**
**European Patent Office**
**Office européen des brevets**

(11) Veröffentlichungsnummer: **0 528 766 B1**

(12) **EUROPÄISCHE PATENTSCHRIFT**

(45) Veröffentlichungstag der Patentschrift: **05.07.95**

(51) Int. Cl.⁶: **A21D 2/36**, A21D 2/26

(21) Anmeldenummer: **92810615.2**

(22) Anmeldetag: **12.08.92**

(54) **Verfahren zur Herstellung eines kalorienarmen, nahrungsfaserreichen, wohlschmeckenden Brotes.**

(30) Priorität: **20.08.91 CH 2442/91**

(43) Veröffentlichungstag der Anmeldung:
**24.02.93 Patentblatt 93/08**

(45) Bekanntmachung des Hinweises auf die
Patenterteilung:
**05.07.95 Patentblatt 95/27**

(84) Benannte Vertragsstaaten:
**AT BE CH DE DK ES FR GB IT LI LU NL PT SE**

(56) Entgegenhaltungen:
EP-A- 0 283 589      FR-A- 2 352 496
FR-A- 2 428 398      GB-A- 1 062 423
GB-A- 2 005 982      US-A- 3 767 423
US-A- 4 109 018      US-A- 4 237 170

(73) Patentinhaber: **STEINER & WEHRLI AG**
**Mühlering 5**
**CH-6102 Malters (CH)**

(72) Erfinder: **Wehrli-Streiff, Hans**
**Zollikerstrasse 168**
**CH-8008 Zürich (CH)**
Erfinder: **Ziegler, Georg**
**Püntstrasse 1**
**CH-8173 Riedt-Neerach (CH)**

(74) Vertreter: **Legland, Brynjulv**
**Seefeldstrasse 225**
**CH-8008 Zürich (CH)**

EP 0 528 766 B1

**Beschreibung**

Die Erfindung betrifft ein Verfahren zur Herstellung eines kalorienarmen, nahrungsfaserreichen, wohlschmeckenden Brotes.

Derartige Brote werden erstens zur Gewichtsreduktion und zweitens zur Behebung von Problemen mit der Verdauung in zunehmendem Masse verlangt. Solche Brote sollten nicht nur wohlschmeckend sein, sondern einen normalen oder erhöhten Ballast- und Mineralstoffgehalt aufweisen.

Herkömmliche Brote dieser Art sind, sofern sie zur Gewichtsreduktion geeignet sind, geschmacklich meistens ungenügend, lassen sich fast nicht schneiden, oder sind klebrig. Wenn sie sich hinsichtlich der Kalorienarmut einigermassen innerhalb der gesetzten Grenzen halten, so schmecken sie bitter, bohnen- oder sägemehlartig, so dass sie sich auch nach hohem Werbeaufwand nach kurzer Zeit auf dem Markt nicht mehr halten lassen.

Bei einigen Broten ist die Herstellung derart kompliziert und aufwendig, dass das Produkt nur schwer in wiederholt gleichbleibender Qualität herstellbar ist.

Kalorienarme und faserreiche Brote sind u. a. in den folgenden Patentschriften offenbart:

CH-A-632 133 beschreibt ein kohlenhydratarmes, kalorienreduziertes Diätbrot aus einem Teig, der ein Mehrfaches der bisher üblichen Knetzeit verlangt. Es wird sogar davon ausgegangen, dass die Knetzeit 6 bis 8 mal länger ist als bei einem bisherigen, normalen Brot.

Ein weiteres Brotprodukt ist in DE-A-23 46 921 offenbart, das fein zerteilte Reis- und Bohnenhülsen enthält. Das Zerteilen dieser Hülsen bedeutet aber nicht, dass sie im voraus entfettet wurden. Infolgedessen ist damit zu rechnen, dass die Hülsen den Geschmack und die Lagerfähigkeit nachteilig beeinflussen.

Ferner ist in der US-A-4 590 076 ein Brotprodukt beschrieben, das von einem Weissbrot ausgeht, dem Alpha-Cellulose in Pulverform beigefügt wurde. Dieser Zusatz zu dem in den USA üblichen Weissbrot ist mit einer Kalorienreduktion verbunden.

Unter dem Namen Enna (Happy Brot-Day) ist ein Mehrkornbrot bekannt, das kalorienvermindernd und ballaststoffreich sein soll. Es besteht aus Weizen- und Roggen-Vollkornmehl, sowie aus einem Anteil Hafer-, Mais-, Soja- und Weizen-Speisekleie. Ferner sind Weizenkeime, Haferflocken und Gerstenflocken enthalten. Das Enna-Brot ist klebrig, schwer und geschmacklich ungenügend.

Schliesslich sind derartige Brote in den folgenden Artikeln beschrieben:

J. G. Ponte: Diätetische und in Nährwert veränderte Brote - (Getreide, Mehl und Brot, 7, 1987).

U. Pechanek und W. Pfannhauser, Grundlagen der Herstellung ballastreicher Brote - (Getreide, Mehl und Brot, 4, 1988).

Aufgabe der Erfindung ist die Schaffung eines Verfahrens zur Herstellung eines kalorienarmen, nahrungsfaserreichen, wohlschmeckenden Brotes, das die Nachteile der herkömmlichen Ausführungen nicht aufweist. Der Geschmack des Brotes soll nicht von demjenigen eines herkömmlichen Brotes im negativen Sinne abweichen. Das Brot soll nicht krümeln oder klebrig, jedoch leicht in Tranchen schneidbar sein. Zudem soll das Brot in der Herstellung einfach und nicht kostspielig sein. Schliesslich soll es möglich sein, den Geschmack des Brotes durch dessen Bestandteile, wie beispielsweise die Getreideart oder die Zusätze, wie Zukkerrüben, Trester, Treber usw. zu beeinflussen.

Diese Aufgabe ist erfindungsgemäss durch die Merkmale im Kennzeichnungsteil des Anspruches 1 gelöst.

Ausführungsformen sind in den abhängigen Ansprüchen umschrieben.

Nachfolgend werden Ausführungsbeispiele des erfindungsgemässen Verfahrens näher erläutert, wobei nicht nur die verwendete Mischung, sondern auch das Backverfahren neu ist.

Einem Brotteig, bestehend aus 40 bis 50 Gew.-% Weizenmehl, 35 bis 45 Gew.-% Wasser, 2 bis 15 Gew.-% Weizenkleber, 3 Gew.-% Hefe und ca. 2 Gew.-% Salz wird eine Mischung aus 15 bis 25 Gew.-% des Weizenmehles eines nahrungsfaserreichen Mehles miteiner zusätzlichen Menge Wasser von ebenfalls ca. 15 bis 25 Gew.-% des Weizenmehls zugegeben.

Je nach Wunsch oder Geschmacksrichtung kann das nahrungsfaserreiche Mehl aus extrahierten Zuckerrüben, Trester, Treber, gemahlenen Kartoffelschalen, gemahlener Hafer-, Gersten-, Weizen-, Roggen-, Reis- oder Sojakleie, Haferspelzen, Bohnenhülsen, Cellulosepulver oder Mischungen hiervon bestehen. Darauf wird der Teig während 15 min. intensiv geknetet.

Bei einem bevorzugten Ausführungsbeispiel wird folgendermassen vorgegangen:

Der Teig für das kalorienarme (brennstoffverminderte), nahrungsfaserreiche Brot wird mit einer fertigmehlmischung in einem Arbeitsgang zubereitet.

2

**Beispiel**

Bestandteile des Brotteiges:

|  | Gew.-% |
| --- | --- |
| Weizenmehl (Aschengehalt 1.1 %) | 49 |
| Wasser (gesamthaft) | 59 |
| Hefe | 3 |
| Weizenkleber | 2 |
| Sojaeiweiss | 2 |
| Salz | 2 |
| Emulgatorbackmittel | 1 |

Ferner ist folgendes in hinzugefügt:

|  | Gew.-% von Weizenmehl |
| --- | --- |
| Cellulosepulver | 6 |
| Mehl aus extrahierten Zuckerrüben | 6 |
| Haferspelzenmehl | 6 |
|  | Total 136 |

| Knetzeit | ca. 15 min. |
| --- | --- |
| Stockgare | ca. 20 min. |
| Stückgare | etwa 30-40 min. |
| Backen | frei geschoben bei ca. 220 °C. |

Wie bei normalen Backverfahren können proteolytische und amylolytische Enzyme, Teigsäuerungsmittel und Milchpulver hinzugefügt werden, welche die Back- und Broteigenschaften verbessern.

Eine Fertigmehlmischung ist erforderlich, um eine genaue Einhaltung der Rezeptur und gleichbleibende Qualität im Geschmack und Volumen zu gewährleisten, sowie ferner um die lebensmittelrechtlichen Anforderungen zu erfüllen.

Beim Ausführungsbeispiel wird ein Brot erhalten, das gegenüber dem üblichen, herkömmlichen Brot ein Drittel weniger Kalorien aufweist.

Das beschriebene Brot hat zudem einen angenehmen Geschmack, der den jeweiligen Geschmacksrichtungen dadurch angepasst werden kann, dass verschiedene Zusätze hinzugefügt werden.

**Patentansprüche**

1. Verfahren zur Herstellung eines kalorienarmen, nahrungsfaserreichen Brotteiges aus Weizenmehl, dadurch gekennzeichnet, dass man dem Brotteig einen Zusatz aus einem Pflanzeneiweiss in 2 bis 15 Gew.-% des Brotteiges sowie eine Mischung in 15 bis 25 % des Weizenmehlgewichtes aus einem oder mehreren nahrungsfaserreichen Mehlsorten hinzufügt, dass ferner zusätzlich Wasser in 15 bis 25 % des Weizenmehlgewichtes dem Brotteig beigegeben, und dass dieser während etwa 15 min. intensiv geknetet wird.

2. Verfahren nach Anspruch 1, dadurch gekennzeichnet, dass als Pflanzeneiweiss Weizenkleber verwendet wird.

3. Verfahren nach Anspruch 1, dadurch gekennzeichnet, dass zusätzlich entfettetes Sojaeiweiss als Nahrungsmittelsubstanz hinzugefügt wird.

4. Verfahren nach einem der Ansprüche 1 bis 3, dadurch gekennzeichnet, dass 0.5 bis 2.0 Gew.-% eines Emulgatorbackmittels zugesetzt werden.

5. Verfahren nach einem der Ansprüche 1 bis 4, dadurch gekennzeichnet, dass das nahrungsfaserreiche Mehl aus einem oder mehreren der folgenden Biofasern gewonnen wird: extrahierte Zuckerrüben, Trester, Treber, Kartoffelschalen, Getreidekleie, Heferspelz, Sojakleie, Bohnenhülsen, Cellulosepulver oder Mischungen davon.

6. Verfahren zur Herstellung des Brotes nach einem der Ansprüche 1 bis 5, dadurch gekennzeichnet, dass der Brotteig abschliessend während etwa 30 bis 60 min. bei einer Temperatur von 200 bis 240°C gebacken wird.

**Claims**

1. Process for the preparation of a low caloric palatable bread rich on dietary fibres of wheat, characterized in that vegetable protein in 2 to 15 weight percent together with a mixture of one or several types of flour rich on nourishment fibers in the range of 15 to 25 weigt percent of the flour of the wheat is added to the bread dough, that further additional water in the range of 15 to 25 percent of the weight of the flour of wheat is added to the bread dough, and that the dough is intensively kneaded for approximate 15 minutes.

2. Process according to claim 1, characterized in that wheat gluten is used as vegetable protein.

3. Process according to claim 1, characterized in that degreased soya gluten is added as food substance.

4. Process according to one of the claims 1 to 3, characterized in that 0.5 to 2.0 weight percent of an baker's emulsifier is added.

5. Process according to one of the claims 1 to 4, characterized in that the flour rich on nourishment fibers is produced from one or more of the following bio-fibers: extracted sugar beets, grape residue, marc, potato peels, grain bran, hefer-spelz, soya bran, bean cover flour, cellulose powder or mixtures thereof.

6. Process for the production of bread according to one of the claims 1 to 5, characterized in that the bread dough finally is baked for a period of approx. 30 to 60 minutes at a temperature of 200 to 240°C.

**Revendications**

1. Procédé pour la préparation d'une pâte à pain à base de farine de froment, pauvre en calories et riche en fibres alimentaires, caractérisé en ce que l'on ajoute à la pâte à pain de 2% à 15% en poids de la pâte à pain de protéines végétales ainsi qu'un mélange allant de 15% à 25% du poids de la farine de froment d'une ou plusieurs sortes de farine riches en fibres alimentaires, en ce que l'on ajoute en outre à la pâte à pain une quantité d'eau atteignant de 15% à 25% du poids de la farine de froment et en ce qu'on met celle-ci à pétrir de façon intense pendant environ 15 minutes.

2. Procédé selon la revendication 1, caractérisé en ce que l'on utilise comme protéine végétale du gluten de froment.

3. Procédé selon la revendication 1, caractérisé en ce que l'on ajoute en plus des protéines de soja dégraissées comme substance alimentaire.

4. Procédé selon l'une quelconque des revendications 1 à 3, caractérisé en ce que l'on ajoute de 0,5 à 2,0% en poids d'une poudre à lever émulsifiante.

5. Procédé selon l'une quelconque des revendications 1 à 4, caractérisé en ce que la farine riche en fibres alimentaires est obtenue à partir d'une ou plusieurs des biofibres suivantes : extrait de betterave à sucre, marc de raisin, épluchures de pommes de terre, son de blé, épeautre d'avoine, son de soja, cosses de haricots, poudre cellulosique ou mélanges de ceux-ci.

6. Procédé pour la préparation du pain selon l'une quelconque des revendications 1 à 5, caractérisé en ce que la pâte à pain est finalement cuite pendant environ 30 à 60 minutes à une température allant de 200 à 240°C.